# EUROPEAN PATENT SPECIFICATION

(11) **EP 0 996 669 B1**
(45) Date of publication and mention of the grant of the patent: **22.09.2004**
(21) Application number: 98931701.1
(22) Date of filing: 25.06.1998
(51) Int. Cl.: C08K 5/3435

(54) **FLAME RETARDANT COMPOSITIONS**
FLAMMHEMMENDE ZUSAMMENSETZUNGEN
COMPOSITIONS IGNIFUGES

(30) Priority: 30.06.1997 US 51331 P
(43) Date of publication of application: 03.05.2000
(60) Divisional application: 04013753.1
(73) Proprietor: Ciba Specialty Chemicals Holding Inc., 4057 Basel (CH)
(72) Inventor: HORSEY, Douglas, Wayne, Briarcliff Manor, NY 10510 (US); ANDREWS, Stephen, Mark, New Fairfield, CT 06812 (US); DAVIS, Leonard, Harris, New City, NY 10956 (US); DYAS, Darrell, David, Jr., Acworth, GA 30101 (US); GRAY, Robert, Leo, West Lafayette, IN 47906 (US); GUPTA, Anunay, Edison, NJ 08817 (US); HEIN, Bruce, Vincent, Marietta, GA 30066 (US); PUGLISI, Joseph, Steven, Crompond, NY 10517 (US); RAVICHANDRAN, Ramanathan, Nanuet, NY 10954 (US); SHIELDS, Paul, Rivervale, NJ 07675 (US); SRINIVASAN, Rangarajan, Tarrytown, NY 10591 (US)
(86) International application number: PCT/US1998/013469
(87) International publication number: WO 1999/000450

(56) References cited:
- EP-A- 0 366 057
- EP-A- 0 792 911
- US-A- 5 393 812

## Description

The instant invention pertains to a method of flame retarding a polymeric substrate by adding thereto an effective flame retarding amount of a selected hindered amine compound.

### Background of the Invention

The hindered amines have long been recognized as light and/or as thermal stabilizers for a host of organic materials subject to degradation induced by oxygen, heat or actinic light. The patent and academic publication literature is replete with references to these hindered amine compounds and their valuable stabilizing efficacies. There is no mention or suggestion in any of such references that the hindered amines themselves are also flame retardants per se.

Particularly relevant are United States Patent Nos. 5,004,770; 5,096,950; 5,204,473 and 5,300,544 as well as 5,844,026. These references pertain to various N-hydrocarbyloxy substituted hindered amines (so called NOR-hindered amines) and to various compositions stabilized therewith. As mentioned above, none of these reference disclose or even hint that the compositions stabilized with the NOR-hindered amines are flame retardant. This inherent property was never discovered, not even serendipitously, until the present invention was made. That this is so, is in itself evidence that even those of considerable skill in the hindered amine stabilizer art were quite surprised by this unexpected discovery. Accordingly, the method of rendering a polymeric substrate flame retardant by incorporating therein a NOR-hindered amine is surprising, unexpected and clearly not obvious to those of skill in this stabilizer art. This invention affords the public a valuable method for flame retarding polymers which cannot be gleaned from any of the prior art references.

United States Patent No. 5,393,812 does describe polyolefin compositions which are made flame retardant by a combination of a halogenated hydrocarbyl phosphate or phosphonate ester flame retardant in combination with a alkoxyamine functional hindered amine, but there is no suggestion that the hindered amine itself is responsible for the flame retardancy, but rather that the hindered amine is preventing delustering and other undesirable effects from occurring in these polyolefin compositions.

European Application No. 0 792 911 A2, published after the filing date of the parent provisional application Serial No. 60/051,331, discloses that alkoxyamine functional hindered amines may be used to enhance the flame retarding efficacy of tris(trihalogenopentyl) phosphate flame retardants.

The flame retardant (FR) market today is comprised of products which function to interfere with the combustion process by chemical and/or physical means. Mechanistically these FRs have been proposed to function during combustion of an article in either the gas phase, the condensed phase or both. The organohalogens are proposed to generate halogen species (e.g. HX) which interferes in the gas phase with free radical organic "fuel" from the polymer substrate. Synergists are proposed to react with HX to form additional chemical species with interfere with combustion in the gas phase, such as reaction of antimony oxide with HX to form antimony halide and water vapor. Still other flame retardant classes are proposed to impart efficacy in the "condensed" phase such as forming a protective char layer on the polyester, or forming an intumescent or foaming on the polymer surface. The char or intumescent layer is thought either to prevent organic fuel from migrating from the polymer into the vapor phase where it can fuel combustion, or the char can act as a thermal shield to protect the underlying polymer article from thermally induced decomposition and generation of fuel. Phosphorus compound of various classes (e.g. halo- or non-halogenated) are an example. Further still, other classes of compounds are proposed to function in the condensed and/or vapor phase. Metal hydrates or metal oxides are proposed to generate water vapor under thermal conditions, the water acting to dilute the fuel mix in the combustion zone and to remove heat from the flame zone via conversion of water to vapor. Alumina trihydrate, magnesium hydroxide or oxide, and other compounds are reported to function in this way.

These state of the art chemistries described above have various detrimental aspects in addition to the effective flame retarding attributes mentioned. Certain organo-brominated compounds are under governmental scrutiny for the generation of toxic by-products during the production or combustion such as dioxanes from polybrominated diphenyl oxides. Certain metal-containing flame retardants, notably antimony oxides, are under scrutiny for worker exposure and toxicity reasons. Antimony oxides often contain trace amounts of arsenic compounds which are suspected carcinogens. Overall, a growing concern has arisen regarding the generation of smoke and toxic gases which are evolved from these flame retardants during a fire. While the classic FRs may be effective combustion suppressants, the toxic gases they form pose a threat to human exposure.

The instant invention alleviates some of the detrimental aspects of the current state of the art which commercial flame retardants pose. The instant NOR-hindered amines are non-halogenated and free of heavy metals, thus avoiding generation of corrosive HX gases and avoiding exposure to toxic metals. In some applications, the instant invention provides a direct replacement for current FR systems while in other cases the instant NOR compounds provide a complimentary enhancement or synergist system for heavy metals (e.g. antimony oxide replacement in ABS) where good flame retardancy can be achieved by using less classic FR agent in the presence of the instant NOR compound.

Accordingly, it is now found that these NOR-hindered amine compounds also have a property totally unknown and totally unexpected, namely that, when incorporated into a wide variety of polymeric substrates, they bestow to the polymeric composition sufficient flame retardancy that the compositions can pass the recognized flame retardancy screening test procedures.

### Detailed Disclosure

The instant invention pertains to a method of flame retarding a polymeric substrate by adding thereto an effective flame retarding amount of a hindered amine compound containing a group of the formula 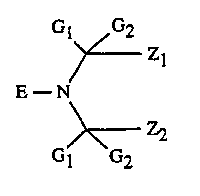 where
G₁ and G₂ are independently alkyl of 1 to 4 carbon atoms or are together pentamethylene,
Z₁ and Z₂ are each methyl, or Z₁ and Z₂ together form a linking moiety which may additionally be substituted by an ester, ether, amide, amino, carboxy or urethane group, and
E is C₅-C₁₂cycloalkoxy, C₇-C₂₅aralkoxy, C₆-C₁₂aryloxy,
and to the corresponding use.

Preferably Z₁ and Z₂ as a linking moiety together with the structure they are bonded to form a 6 membered ring, especially a substituted piperidine ring. A preferred hindered amine compound is a substituted 2,2,6,6-tetramethylpiperidine.

Preferably E is cycloalkoxy or aralkoxy, especially cyclohexyloxy.

More particularly, the instant invention relates a method of flame retarding a polymeric substrate which comprises
adding to said substrate an effective flame retarding amount of a hindered amine of a hindered amine compound having a formula of structure A-R 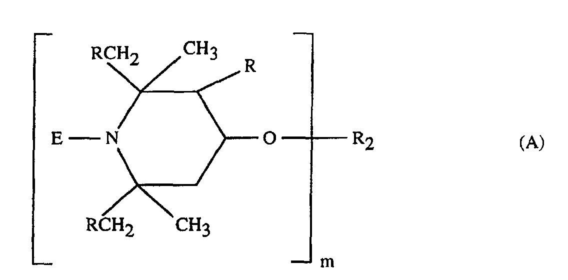 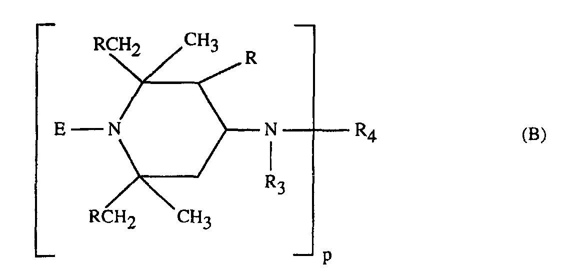 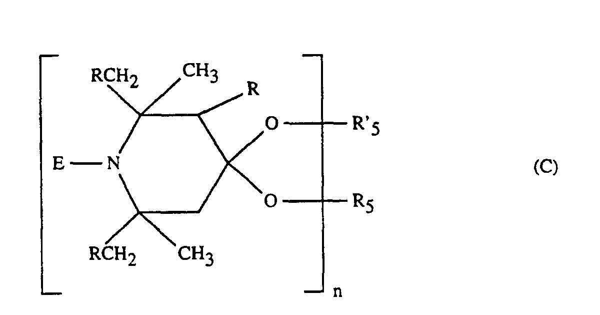 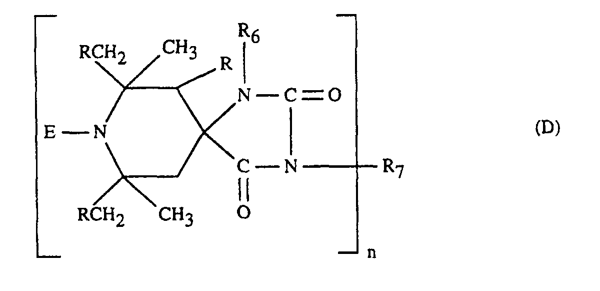 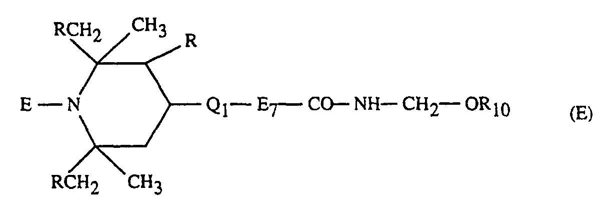 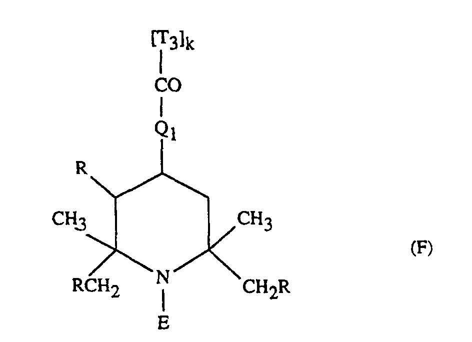 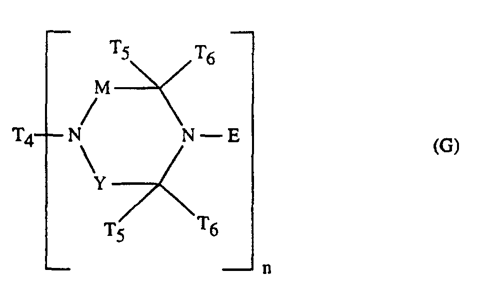 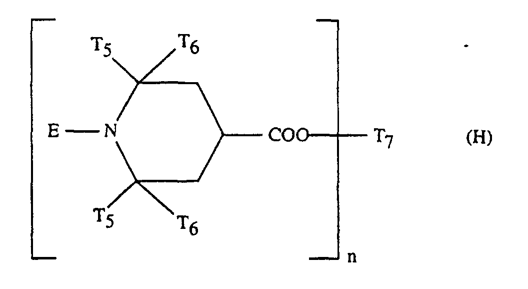 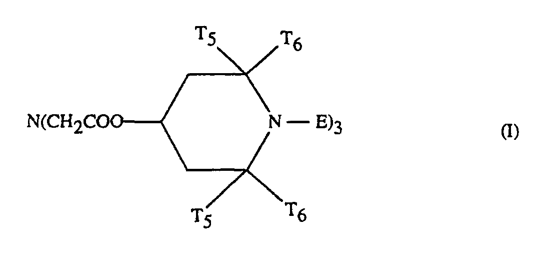 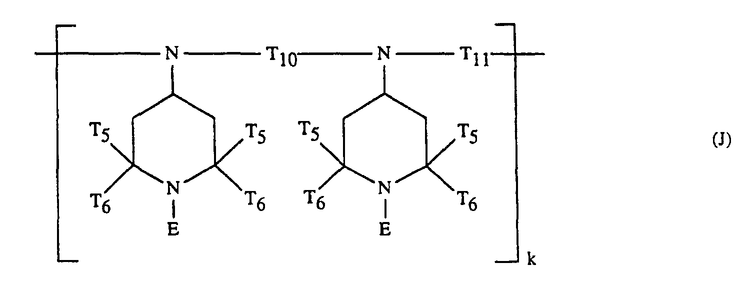 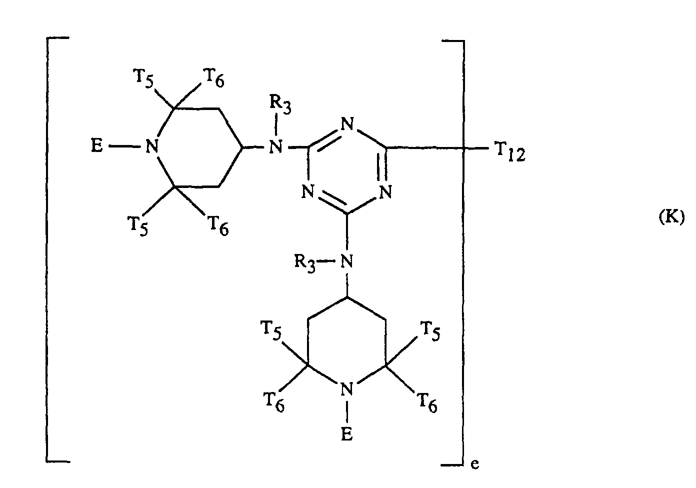 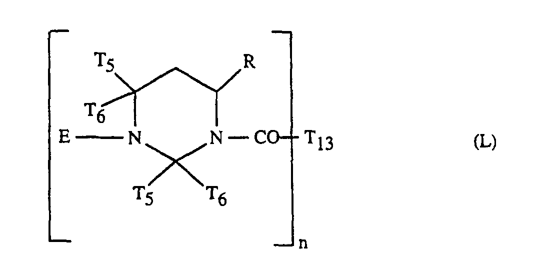 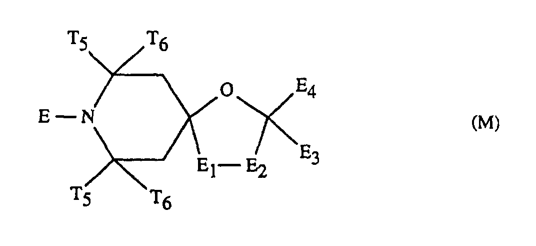 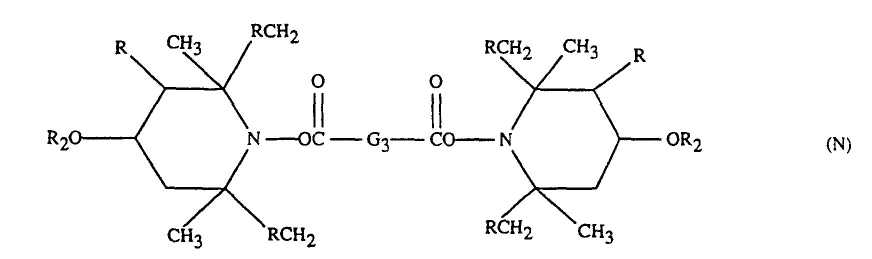 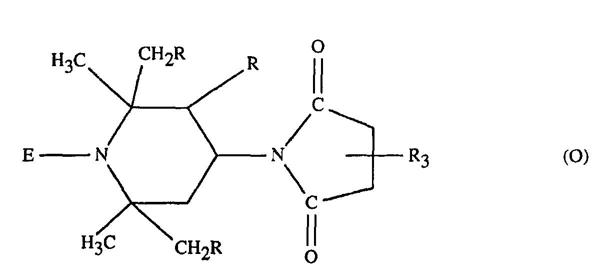 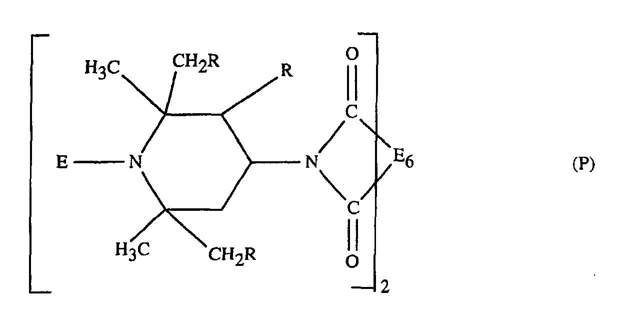 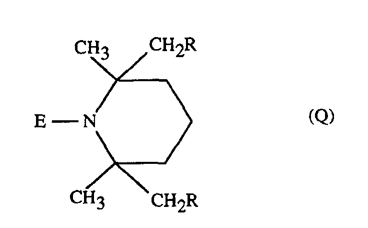 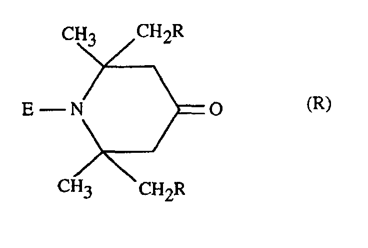 wherein
E is cycloalkoxy of 5 to 12 carbon atoms or aralkoxy of 7 to 15 carbon atoms,
R is hydrogen or methyl,
m is 1 to 4,
when m is 1,
R₂ is hydrogen, C₁-C₁₈alkyl or said alkyl optionally interrupted by one or more oxygen atoms, C₂-C₁₂alkenyl, C₆-C₁₀aryl, C₇-C₁₈aralkyl, glycidyl, a monovalent acyl radical of an aliphatic,cycloaliphatic or aromatic carboxylic acid, or a carbamic acid, preferably an acyl radical of an aliphatic carboxylic acid having 2-18 C atoms, of a cyclo-aliphatic carboxylic acid having 5-12 C atoms or of an aromatic carboxylic acid having 7-15 C atoms, or 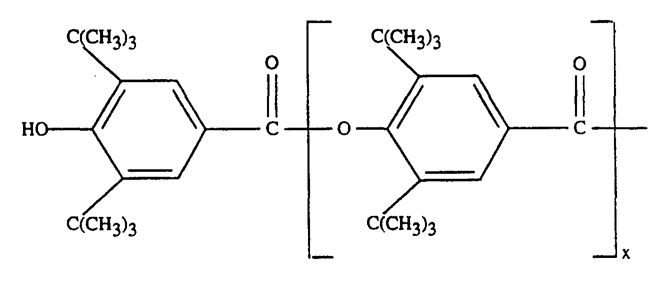 wherein x is 0 or 1, 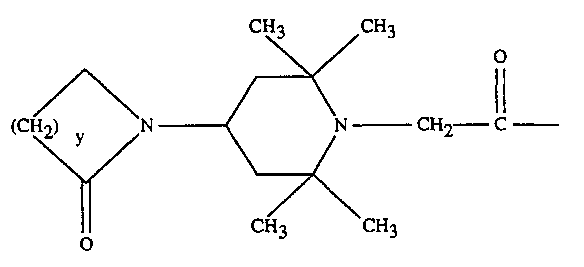 wherein y is 2-4;
when m is 2,
R₂ is C₁-C₁₂alkylene, C₄-C₁₂alkenylene, xylylene, a divalent acyl radical of an aliphatic, cycloaliphatic, araliphatic or aromatic dicarboxylic acid or of a dicarbamic acid, preferably an acyl radical of an aliphatic dicarboxylic acid having 2-18 C atoms, of a cycloaliphatic or aromatic dicarboxylic acid having 8-14 C atoms, or of an aliphatic, cycloaliphatic or aromatic dicarbamic acid having 8-14 C atoms; 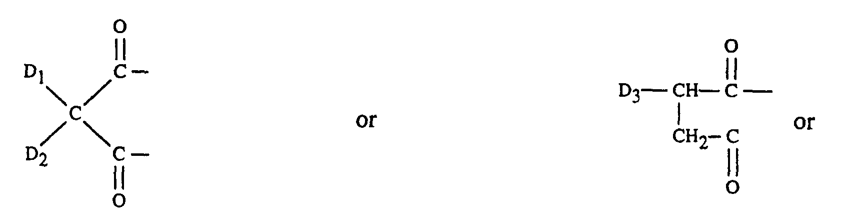 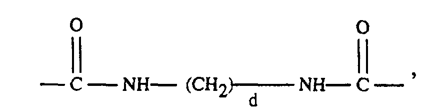 wherein D₁ and D₂ are independently hydrogen, an alkyl radical containing up to 8 carbon atoms, an aryl or aralkyl radical including 3,5-di-t-butyl-4-hydroxybenzyl radical, D₃ is hydrogen, or an alkyl or alkenyl radical containing up to 18 carbon atoms, and d is 0-20;
when m is 3, R₂ is a trivalent acyl radical of an aliphatic, unsaturated aliphatic, cycloaliphatic, or aromatic tricarboxylic acid;
when m is 4, R₂ is a tetravalent acyl radical of a saturated or unsaturated aliphatic or aromatic tetracarboxylic acid including 1,2,3,4-butanetetracarboxylic acid, 1,2,3,4-but-2-ene-tetracarboxylic , and 1,2,3,5- and 1,2,4,5-pentanetetracarboxylic acid;
p is 1, 2 or 3,
R₃ is hydrogen, C₁-C₁₂alkyl, C₅-C₇cycloalkyl, C₇-C₉aralkyl, C₂-C₁₈alkanoyl, C₃-C₅alkenoyl or benzoyl;
when p is 1,
R₄ is hydrogen, C₁-C₁₈alkyl, C₅-C₇cycloalkyl, C₂-C₈alkenyl, unsubstituted or substituted by a cyano, carbonyl or carbamide group, aryl, aralkyl, or it is glycidyl, a group of the formula -CH₂-CH(OH)-Z or of the formula -CO-Z or -CONH-Z wherein Z is hydrogen, methyl or phenyl; or a group of the formulae 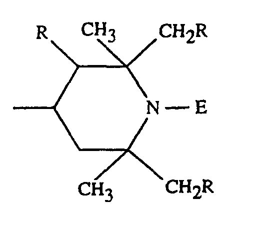 or 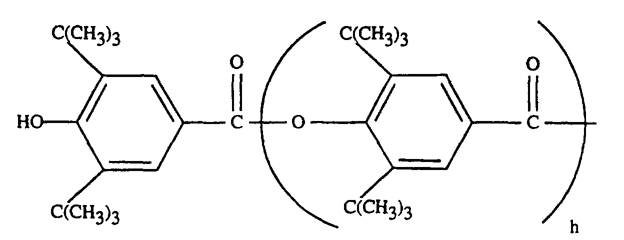 where h is 0 or 1
R₃ and R₄ together, when p is 1, can be alkylene of 4 to 6 carbon atoms or 2-oxo-polyalkylene the cyclic acyl radical of an aliphatic or aromatic 1,2- or 1,3-dicarboxylic acid,
when p is 2,
R₄ is a direct bond or is C₁-C₁₂alkylene, C₆-C₁₂arylene, xylylene, a -CH₂CH(OH)-CH₂ group or a group -CH₂-CH(OH)-CH₂-O-X-O-CH₂-CH(OH)-CH₂- wherein X is C₂-C₁₀-alkylene, C₆-C₁₅arylene or C₆-C₁₂cycloalkylene; or, provided that R₃ is not alkanoyl, alkenoyl or benzoyl, R₄ can also be a divalent acyl radical of an aliphatic, cycloaliphatic or aromatic dicarboxylic acid or dicarbamic acid, or can be the group -CO-; or
R₄ is 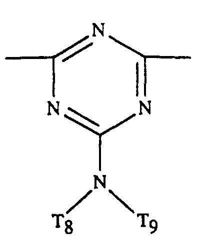 where T₈ and T₉ are independently hydrogen, alkyl of 1 to 18 carbon atoms, or T₈ and T₉ together are alkylene of 4 to 6 carbon atoms or 3-oxapentamethylene, preferably T₈ and T₉ together are 3-oxapentamethylene;
when p is 3,
R₄ is 2,4,6-triazinyl,
n is 1 or 2,
when n is 1,
R₅ and R'₅ are independently C₁-C₁₂ alkyl, C₂-C₁₂ alkenyl, C₇-C₁₂ aralkyl, or R₅ is also hydrogen, or R₅ and R'₅ together are C₂-C₈alkylene or hydroxyalkylene or C₄-C₂₂acyloxyalkylene;
when n is 2,
R₅ and R'₅ together are (-CH₂)₂C(CH₂-)₂;
R₆ is hydrogen, C₁-C₁₂alkyl, allyl, benzyl, glycidyl or C₂-C₆alkoxyalkyl;
when n is 1,
R₇ is hydrogen, C₁-C₁₂alkyl, C₃-C₅alkenyl, C₇-C₉aralkyl, C₅-C₇cycloalkyl, C₂-C₄hydroxyalkyl, C₂-C₆alkoxyalkyl, C₆-C₁₀ aryl, glycidyl, a group of the formula -(CH₂)ₜ-COO-Q or of the formula -(CH₂)ₜ-O-CO-Q wherein t is 1 or 2, and Q is C₁-C₄alkyl or phenyl; or
when n is 2,
R₇ is C₂-C₁₂alkylene, C₆-C₁₂arylene, a group -CH₂CH(OH)-CH₂-O-X-O-CH₂-CH(OH)-CH₂- wherein X is C₂-C₁₀alkylene, C₆-C₁₅arylene or C₆-C₁₂cycloalkylene, or a group -CH₂CH(OZ')CH₂-(OCH₂-CH(OZ')CH₂)₂- wherein Z' is hydrogen, C₁-C₁₈alkyl, allyl, benzyl, C₂-C₁₂alkanoyl or benzoyl;
Q₁ is -N(R₈)- or -O-; E₇ is C₁-C₃ alkylene, the group -CH₂-CH(R₉)-O- wherein R₉ is hydrogen, methyl or phenyl, the group -(CH₂)₃-NH- or a direct bond;
R₁₀ is hydrogen or C₁-C₁₈ alkyl, R₈ is hydrogen, C₁-C₁₈alkyl, C₅-C₇cycloalkyl, C₇-C₁₂aralkyl, cyanoethyl, C₆-C₁₀aryl, the group -CH₂-CH(R₉)-OH wherein R₉ has the meaning defined above; a group of the formula 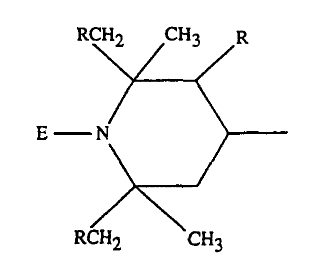 or a group of the formula 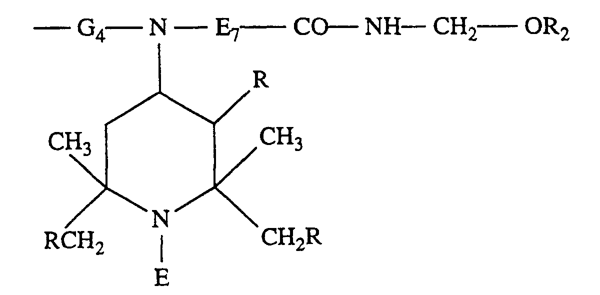 wherein G₄ is C₂-C₆alkylene or C₆-C₁₂arylene; or R₈ is a group -E₇-CO-NH-CH₂-OR₁₀;

Formula F denotes a recurring structural unit of a polymer where T₃ is ethylene or 1,2-propylene, is the repeating structural unit derived from an alpha-olefin copolymer with an alkyl acrylate or methacrylate; preferably a copolymer of ethylene and ethyl acrylate, and where k is 2 to 100;
T₄ has the same meaning as R₄ when p is 1 or 2,
T₅ is methyl,
T₆ is methyl or ethyl, or T₅ and T₆ together are tetramethylene or pentamethylene, preferably T₅ and T₆ are each methyl,
M and Y are independently methylene or carbonyl, and T₄ is ethylene where n is 2;
T₇ is the same as R₇, and T₇ is preferably octamethylene where n is 2,
T₁₀ and T₁₁ are independently alkylene of 2 to 12 carbon atoms, or T₁₁ is 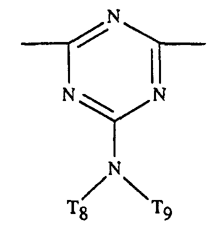 T₁₂ is piperazinyl, -NR₁₁-(CH₂)_{d}-NR₁₁- or 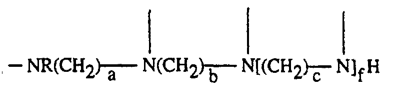 where R₁₁ is the same as R₃ or is also 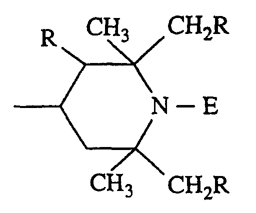 a, b and c are independently 2 or 3, and f is 0 or 1, preferably a and c are each 3, b is 2 and f is 1; and
e is 2, 3 or 4, preferably 4;
T₁₃ is the same as R₂ with the proviso that T₁₃ cannot be hydrogen when n is 1;
E₁ and E₂, being different, each are -CO- or -N(E₅)- where E₅ is hydrogen, C₁-C₁₂ alkyl or C₄-C₂₂ alkoxycarbonylalkyl, preferably E₁ is -CO- and E₂ is -N(E₅)-,
E₃ is hydrogen, alkyl of 1 to 30 carbon atoms, phenyl, naphthyl, said phenyl or said naphthyl substituted by chlorine or by alkyl of 1 to 4 carbon atoms, or phenylalkyl of 7 to 12 carbon atoms, or said phenylalkyl substituted by alkyl of 1 to 4 carbon atoms,
E₄ is hydrogen, alkyl of 1 to 30 carbon atoms, phenyl, naphthyl or phenylalkyl of 7 to 12 carbon atoms, or
E₃ and E₄ together are polymethylene of 4 to 17 carbon atoms, or said polymethylene substituted by up to four alkyl groups of 1 to 4 carbon atoms, preferably methyl,
E₆ is an aliphatic or aromatic tetravalent radical,
R₂ of formula (N) is a previously defined when m is 1;
G₁ a direct bond, C₁-C₁₂ alkylene, phenylene or -NH-G'-NH wherein G' is C₁-C₁₂ alkylene; or
wherein the hindered amine compound is a compound of the formula I, II, III, IV, V, VI, VII, VIII, IX, X or XI 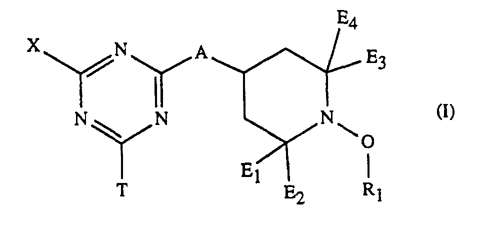 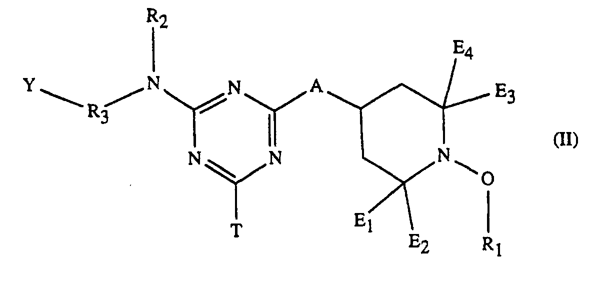 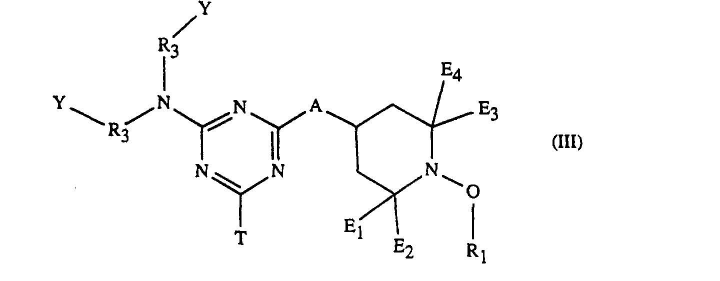 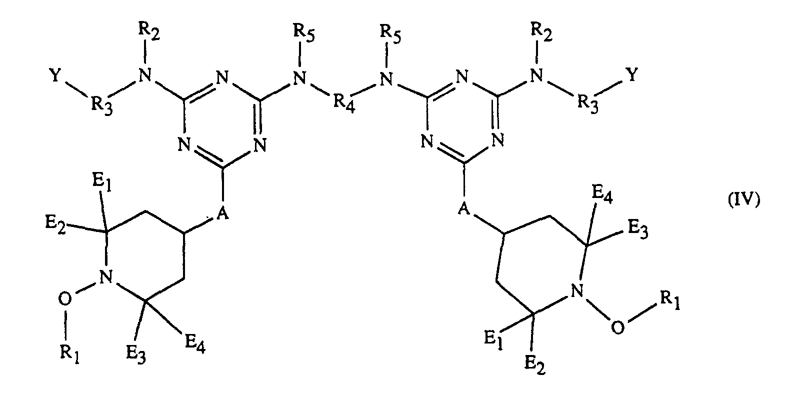 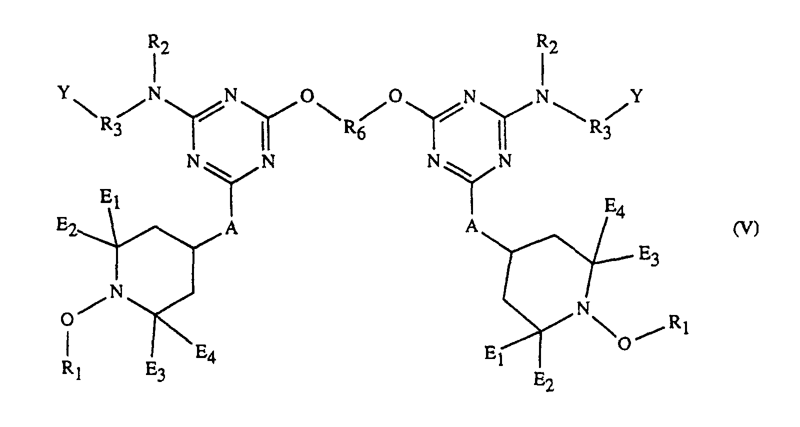 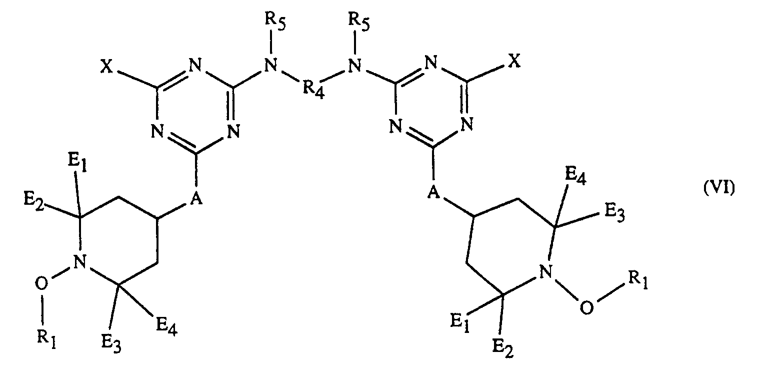 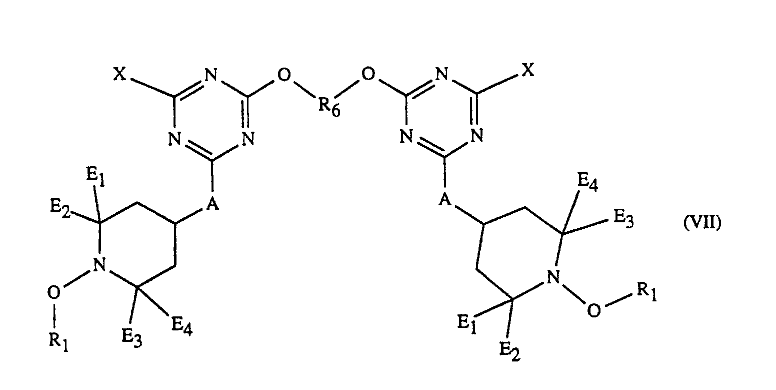 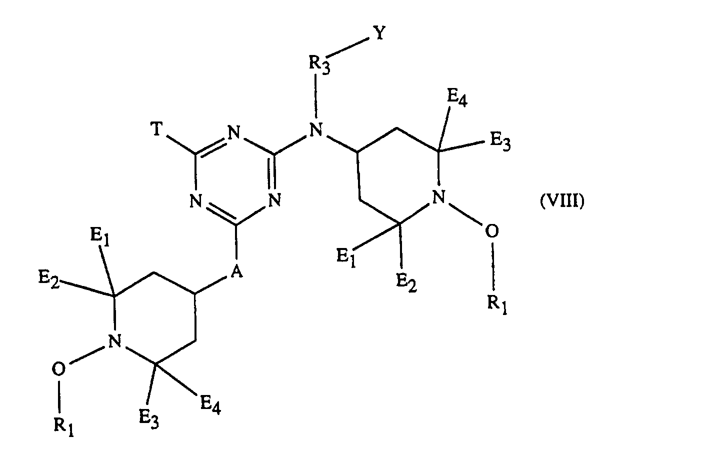 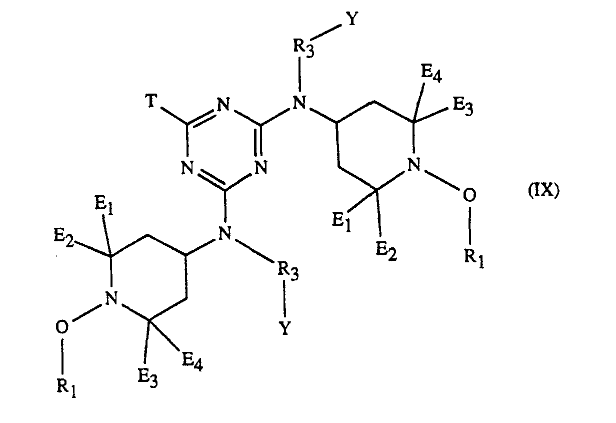 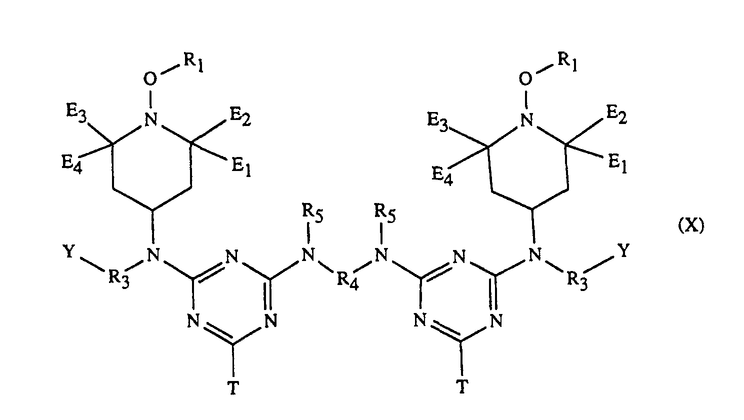 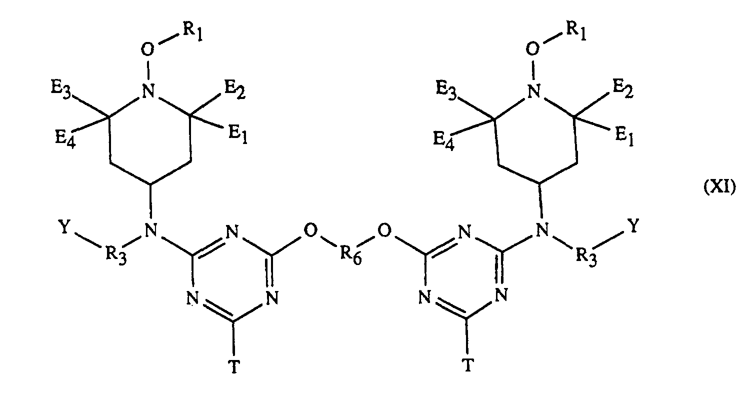 wherein
E₁, E₂, E₃ and E₄ are independently alkyl of 1 to 4 carbon atoms, or E₁ and E₂ are independently alkyl of 1 to 4 carbon atoms and E₃ and E₄ taken together are pentamethylene, or E₁ and E₂; and E₃ and E₄ each taken together are pentamethylene,
R₁ is cycloalkyl of 5 to 12 carbon atoms, a bicyclic or tricyclic hydrocarbon radical of 7 to 12 carbon atoms, phenylalkyl of 7 to 15 carbon atoms, aryl of 6 to 10 carbon atoms or said aryl substituted by one to three alkyl of 1 to 8 carbon atoms,
R₂ is hydrogen or a linear or branched chain alkyl of 1 to 12 carbon atoms,
R₃ is alkylene of 1 to 8 carbon atoms, or R₃ is -CO-, -CO-R₄-, -CONR₂-, or -CO-NR₂-R₄-,
R₄ is alkylene of 1 to 8 carbon atoms,
R₅ is hydrogen, a linear or branched chain alkyl of 1 to 12 carbon atoms, or 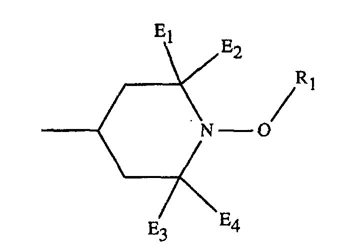 or when R₄ is ethylene, two R₅ methyl substituents can be linked by a direct bond so that the triazine bridging group -N(R₅)-R₄-N(R₅)- is a piperazin-1,4-diyl moiety,
R₆ is alkylene of 2 to 8 carbon atoms or R₆ is 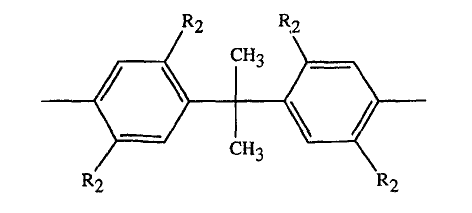 with the proviso that Y is not -OH when R₆ is the structure depicted above,
A is -O- or -NR₇- where R₇ is hydrogen, a straight or branched chain alkyl of 1 to 12 carbon atoms, or R₇ is 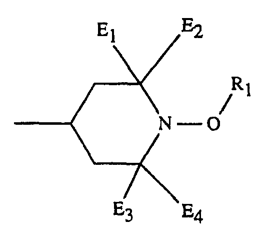 T is phenoxy, phenoxy substituted by one or two alkyl groups of 1 to 4 carbon atoms, alkoxy of 1 to 8 carbon atoms or -N(R₂)₂ with the stipulation that R₂ is not hydrogen, or T is 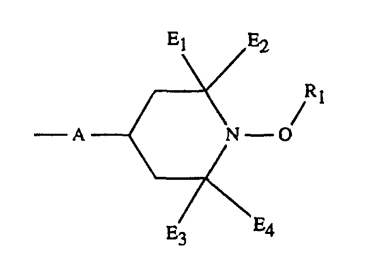 X is -NH₂, -NCO, -OH, -O-glycidyl, or -NHNH₂, and
Y is -OH, -NH₂, -NHR₂ where R₂ is not hydrogen; or Y is -NCO, -COOH, oxiranyl, -O-glycidyl, or -Si(OR₂)₃; or the combination R₃-Y- is -CH₂CH(OH)R₂ where R₂ is alkyl or said alkyl interrupted by one to four oxygen atoms, or R₃-Y- is -CH₂OR₂; or
wherein the hindered amine compound is a mixture of N,N',N'''-tris{2,4-bis-[( 1-hydrocarbyloxy-2,2,6,6-tetramethylpiperidin-4-yl)alkylamino]-s-triazin-6-yl}-3,3'-ethylenediiminodipropylamine; N,N',N''-tris{2,4-bis[(1-hydrocarbyloxy-2,2,6,6-tetramethylpiperidin-4-yl)alkylamino]-s-triazin-6-yl}-3,3'-ethylenediiminodipropylamine, and bridged derivatives as described by formulas I, II, IIA and III

R₁NH-CH₂CH₂CH₂NR₂CH₂CH₂NR₃CH₂CH₂CH₂NHR₄ (I)

T-E₁-T₁ (II)

T-E₁ (IIA)

G-E₁-G₁-E₁-G₂ (III)

where in the tetraamine of formula I
R₁ and R₂ are the s-triazine moiety E; and one of R₃ and R₄ is the s-triazine moiety E with the other of R₃ or R₄ being hydrogen,
E is 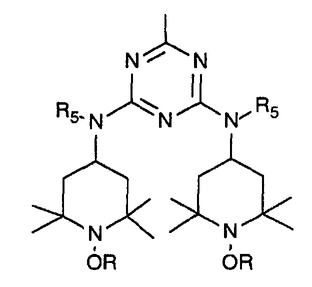 R is cyclohexyl,
R₅ is alkyl of 1 to 12 carbon atoms, preferably n-butyl,
where in the compound of formula II or IIA
T and T₁ are each a substituted by R₁-R₄ as is defined for formula I, where
(1) one of the s-triazine moieties E in each tetraamine is replaced by the group E₁ which forms a bridge between two tetraamines T and T₁,
   E₁ is 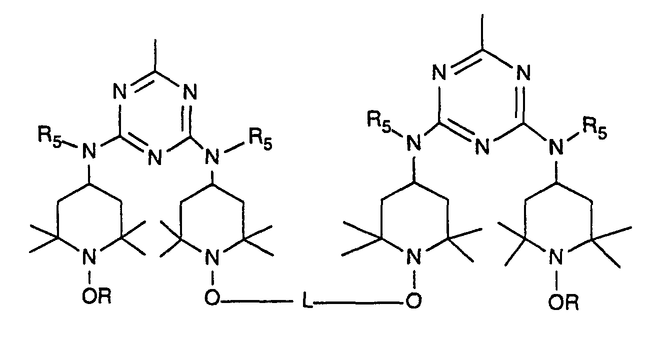 or
(2) the group E₁ can have both termini in the same tetraamine T as in formula IIA where two of the E moieties of the tetraamine are replaced by one E₁ group, or
(3) all three s-triazine substituents of tetraamine T can be E₁ such that one E₁ links T and T₁ and a second E₁ has both termini in tetraamine T,
L is propanediyl, cyclohexanediyl or octanediyl;
where in the compound of formula III
G, G₁ and G₂ are each tetraamines substituted by R₁-R₄ as defined for formula I, except that G and G₂ each have one of the s-triazine moieties E replaced by E₁, and G₁ has two of the triazine moieties E replaced by E₁, so that there is a bridge between G and G₁ and a second bridge between G₁ and G₂;
which mixture is prepared by reacting two to four equivalents of 2,4-bis[(1-hydrocarbyloxy-2,2,6,6-piperidin-4-yl)butylamino]-6-chloro-s-triazine with one equivalent of N,N'-bis(3-aminopropyl)ethylenediamine.

In the structures A to R, if any substituents are alkyl they are mainly C₁-C₁₈ alkyl, for example methyl, ethyl, n-propyl, n-butyl, sec-butyl, tert-butyl, n-hexyl, n-octyl, 2-ethylhexyl, n-nonyl, n-decyl, n-undecyl, n-dodecyl, n-tridecyl, n-tetradecyl, n-hexadecyl or n-octadecyl. Typical cycloalkyl groups include cyclopentyl and cyclohexyl; typical cycloalkenyl groups include cyclohexenyl; while typical aralkyl groups include benzyl, alpha-methyl-benzyl, alpha,alpha-dimethylbenzyl or phenethyl. C₁-C₁₂ alkyl and cyclohexyl are preferred. Whenever aryl is mentioned, this means mostly C₆-C₁₂aryl, preferably phenyl or naphthyl, especially phenyl. Aralkyl is usually the alkyl as defined, which is substituted by the above aryl; preferred is C₇-C₁₁phenylalkyl. Alk(yl)aryl is the above aryl substituted by alkyl; preferred is phenyl mono-, di- or trisubstituted by C₁-C₄alkyl.
Groups which may be unsubstituted or substituted by selected radicals such as C₆-C₁₂aryl or C₅-C₁₂cycloalkyl, like a phenyl or a cyclohexyl ring, are preferably unsubstituted or mono-, di- or tri-substituted, especially preferred are these groups unsubstituted or mono- or disubstituted.

If R₂ is a monovalent acyl radical of a carboxylic acid, it is for example an acyl radical of acetic acid, stearic acid, salicyclic acid, benzoic acid or β-(3,5-di-tert-butyl-4-hydroxyphenyl) propionic acid.

If R₂ is a divalent acyl radical of a dicarboxylic acid, it is for example an acyl radical of oxalic acid, adipic acid, succinic acid, suberic acid, sebacic acid, phthalic acid dibutylmalonic acid, dibenzylmalonic acid or butyl-(3,5-di-tert-butyl-4-hydropxybenzyl)-malonic acid, or bicycloheptenedicarboxylic acid, with succinates, sebacates, phthalates and isophthalates being preferred.

If R₂ is a divalent acyl radical of a dicarbamic acid, it is for example an acyl radical of hexamethylenedicarbamic acid or of 2,4-toluylenedicarbamic acid.

The instant NOR hindered amine compounds as described above are mostly known in the prior art and are prepared as taught or in analogy to methods described in United States Patent Nos. 5,004,770; 5,096,950; 5,204,473 and 5,300,544 and in US 5,844,026.

These references claim compositions where the effective stabilizing amount of the NOR-hindered amine is up to 5% by weight based on the polymeric substrate. Inasmuch as the amount of NOR compound in the instant invention can be up to 10% by weight of the polymer substrate, the instant invention also pertains to flame retardant compositions which comprise
(a) a polymer, and
(b) 5.1 to 10% (preferably 5.1 to 9%, most preferably 5.1 to 8%) by weight of a NOR hindered amine as described supra based on the weight of said polymer.

While the polymeric substrate can be any of a wide variety of polymeric types including polyolefins, polystyrenics, and PVC, but preferably the polymer substrate is selected from the group of resins consisting of the polyolefins, the thermoplastic olefins, styrenic polymers and copolymers, ABS and polymers which contain hetero atoms double bonds or aromatic rings, for example:
1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbomene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), branched low density polyethylene (BLDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbomene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Polystyrene, poly(p-methylstyrene), poly(α-methylstyrene).
5. Copolymers of styrene or α-methylstyrene with dienes or acrylic derivatives, for example styrene/butadiene, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/ styrene.
6. Graft copolymers of styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS (acrylonitrile/butadiene/styrene), MBS, ASA or AES polymers.
7. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride (PVC), polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
   Especially preferred are polypropylene, polyethylene, thermoplastic olefin (TPO), ABS and high impact polystyrene; most preferred are polypropylene, polyethylene, thermoplastic olefin (TPO).

The effective flame retarding amount of the hindered amine is that needed to show flame retarding efficacy as measured by one of the standard methods used to assess flame retardancy. These include the NFPA 701 Standard Methods of Fire Tests for Flame-Resistant Textiles and Films, 1989 and 1996 editions; the UL 94 Test for Flammability of Plastic Materials for Parts in Devices and Appliances, 5th Edition, October 29, 1996; Limiting Oxygen Index (LOI), ASTM D-2863; and Cone Calorimetry, ASTM E-1354.

The effective amount of hindered amine to achieve flame retardancy is often from 0.25 to 10% by weight based on the polymeric substrate; preferably 0.5 to 8% by weight; and most preferably 0.5 to 2% by weight.

While the instant NOR- hindered amines in general possess this desirable flame retarding efficacy, the preferred hindered amines are those where E is cycloalkoxy or aralkoxy; most preferably where E is cyclohexyloxy. It is surprising that the NOR-hindered amines possess this flame retarding activity.

The instant invention also pertains to a flame retardant composition which comprises
(a) a polymeric substrate,
(b) an effective flame retarding amount of a synergistic mixture of
   (i) a hindered amine as described above, and
   (ii) a selected flame retardant compound selected from the halogenated, phosphorus, boron, silicon and antimony compounds, metal hydroxides, metal hydrates and metal oxides or mixtures thereof.
A flame retardant composition of present invention often comprises further conventional additives such as disclosed in WO96/28431 from page 20, line 5, until page 29, line 14, and publications cited therein; these conventional additives comprise, for example, antioxidants, UV absorbers, hindered amine light stabilizers, metal deactivators, phosphites or phosphonites, thio synergists and fillers. Preferred conventional additives include a phosphorus compound selected from the group consisting of tris(2,4-di-tert-butylphenyl) phosphite, bis(2,4-di-tert-butyl-6-methylphenyl) ethyl phosphite, 2,2',2"-nitrilo[triethyl-tris-(3,3',5,5'-tetra-tert-butyl-1,1'-biphenyl-2,2'-diyl) phosphite], tetrakis(2,4-di-butylphenyl) 4,4'-biphenylenediphosphonite, tris(nonylphenyl) phosphite, bis(2,4-di-tert-butylphenyl) pentaerythrityl diphosphite, 2,2'-ethylidenebis(2,4-di-tert-butylphenyl) fluorophosphite and 2-butyl-2-ethylpropan-1,3-diyl 2,4,6-tri-tert-butylphenyl phosphite; or a UV absorber selected from the group consisting of 2-(2-hydroxy-3,5-di-α-cumylphenyl)-2H-benzotriazole, 2-(2-hydroxy-5-methylphenyl)-2H-benzotriazole, 5-chloro-2-(2-hydroxy-3,5-di-tert-butylphenyl)-2H-benzotriazole, 2-(2-hydroxy-3,5-di-tert-amylphenyl)-2H-benzotriazole, 2-(2-hydroxy-3-α-cumyl-5-tert-octylphenyl)-2H-benzotriazole, 2,4-di-tert-butylphenyl 3,5-di-tert-butyl-4-hydroxybenzoate, 2-hydroxy-4-n-octyloxybenzophenone and2,4-bis(2,4-dimethyphenyl)-6-(2-hydroxy-4-octyloxyphenyl)-s-triazine.

The effective flame retarding amount of the synergistic mixture (b) containing components (i) and (ii) expediently is 0.5 to 30% by weight based on component (a).

In that synergistic mixture (b), the effective flame retarding amount of a hindered amine expediently is 0.5 to 10% by weight based on component (a); and preferably is 0.5 to 8% by weight based on component (a).

In that synergistic mixture (b), the effective flame retarding amount of a flame retardant compound expediently is 0.5 to 20% by weight based on component (a); and preferably is 0.5 to 16% by weight based on component (a).

In the composition and in the method of flame retarding according to present invention, preferably no flame retardant is used from the class of halogenated hydrocarbyl phosphates or phosphonates, such as halogenated phosphate or phosphonate esters; most preferably no tris(trihaloneopentyl) phosphate is used.

In general, preferred hindered amine compounds for use in present invention include
(a) the mixture of compounds of formula I, II, IIA and III where R is cyclohexyl;
(b) 1-cyclohexyloxy-2,2,6,6-tetramethyl-4-octadecylaminopiperidine;
(d) 2,4-bis[(1-cyclohexyloxy-2,2,6,6-tetramethylpiperidin-4-yl)butylamino]-6-(2-hydroxyethylamino-s-triazine;
(e) bis(1-cyclohexyloxy-2,2,6,6-tetramethylpiperidin-4-yl) adipate;
(g) the oligomeric compound which is the condensation product of 4,4'-hexamethylenebis(amino-2,2,6,6-tetramethylpiperidine) and 2,4-dichloro-6-[(1-cyclohexyloxy-2,2,6,6-tetramethylpiperidin-4-yl)butylamino]-s-triazine end-capped with 2-chloro-4,6-bis(dibutylamino)-s-triazine; or
(h) 2,4-bis[(1-cyclohexyloxy-2,2,6,6-piperidin-4-yl)-butylamino]-6-chloro-s-triazine.

More particularly, the flame retardant compounds useful in the instant invention are preferably selected from the group consisting of
tetraphenyl resorcinol diphosphite (FYROLFLEX® RDP, Akzo Nobel),
chloroalkyl phosphate esters (ANTIBLAZE® AB-100, Albright & Wilson; FYROL® FR-2, Akzo Nobel)
polybrominated diphenyl oxide (DE-60F, Great Lakes Corp.)
decabromodiphenyl oxide (DBDPO; SAYTEX® 102E)
antimony trioxide (Sb₂O₃),
antimony pentoxide (Sb₂O₅),
tris[3-bromo-2,2-(bromomethyl)propyl] phosphate (PB 370®, FMC Corp.),
triphenyl phosphate,
bis(2,3-dibromopropyl ether) of bisphenol A (PE68),
ammonium polyphosphate (APP) or (HOSTAFLAM® AP750),
resorcinol diphosphate oligomer (RDP),
brominated epoxy resin,
ethylene-bis(tetrabromophthalimide) (BT93),
bis(hexachlorocyclopentadieno)cyclooctane (DECLORANE PLUS®),
calcium sulfate
chlorinated paraffins,
magnesium carbonate,
melamine phosphates,
melamine pyrophosphates,
molybdenum trioxide,
zinc oxide,
1,2-bis(tribromophenoxy)ethane (FF680),
tetrabromo-bisphenol A (SAYTEX® RB100),
magnesium hydroxide,
alumina trihydrate,
zinc borate,
ethylenediamine diphosphate (EDAP)
silica,
silicones,
calcium silicate, and
magnesium silicate.

The following examples are meant for illustrative purposes only and are not to be construed to limit the scope of this invention in any manner whatsoever.

Coadditives found useful for use with the instant NOR-hindered amine compounds in flame retardant compositions are as follows:
Phosphorus Compounds:
   tris(2,4-di-tert-butylphenyl) phosphite, (IRGAFOS® 168, Ciba Specialty Chemicals Corp.);
   bis(2,4-di-tert-butyl-6-methylphenyl) ethyl phosphite, (IRGAFOS® 38, Ciba Specialty Chemicals Corp.);
   2,2',2"-nitrilo[triethyl-tris-(3,3',5,5'-tetra-tert-butyl-1,1'-biphenyl-2,2'-diyl) phosphite], (IRGAFOS® 12, Ciba Specialty Chemicals Corp.);
   tetrakis(2,4-di-butylphenyl) 4,4'-biphenylenediphosphonite, (IRGAFOS® P-EPQ, Ciba Specialty Chemicals Corp.);
   tris(nonylphenyl) phosphite, (TNPP®, General Electric);
   bis(2,4-di-tert-butylphenyl) pentaerythrityl diphosphite, (ULTRANOX® 626, General Electric);
   2,2'-ethylidenebis(2,4-di-tert-butylphenyl) fluorophosphite, (ETHANOX® 398, Ethyl Corp.)
   2-butyl-2-ethylpropan-1,3-diyl 2,4,6-tri-tert-butylphenyl phosphite, (ULTRANOX® 641, General Electric).
Flame retardants:
   tris[3-bromo-2,2-bis(bromomethyl)propyl] phosphate, (PB 370®, FMC Corp.) decabromodiphenyl oxide, (DBDPO);
   ethylene bis-(tetrabromophthalimide), (SAYTEX® BT-93);
   ethylene bis-(dibromo-norbornanedicarboximide), (SAYTEX® BN-451) UV absorbers:
   2-(2-hydroxy-3,5-di-α-cumylphenyl)-2H-benzotriazole, (TINUVIN® 234, Ciba Specialty Chemicals Corp.);
   2-(2-hydroxy-5-methylphenyl)-2H-benzotriazole, (TINUVIN® P, Ciba Specialty Chemicals Corp.);
   5-chloro-2-(2-hydroxy-3,5-di-tert-butylphenyl)-2H-benzotriazole, (TINUVIN® 327, Ciba Specialty Chemicals Corp.);
   2-(2-hydroxy-3,5-di-tert-amylphenyl)-2H-benzotriazole, (TINUVIN® 328, Ciba Specialty Chemicals Corp.);
   2-(2-hydroxy-3-α-cumyl-5-tert-octylphenyl)-2H-benzotriazole, (TINUVIN® 928, Ciba Specialty Chemicals Corp.);
   2,4-di-tert-butylphenyl 3,5-di-tert-butyl4-hydroxybenzoate, (TINUVIN® 120, Ciba Specialty Chemicals Corp.);
   2-hydroxy-4-n-octyloxybenzophenone, (CHIMASSORB® 81, Ciba Specialty Chemicals Corp.);
   2,4-bis(2,4-dimethyphenyl)-6-(2-hydroxy-4-octyloxyphenyl)-s-triazine, (CYASORB® 1164, Cytec).

### Test Methods

NFPA 701 Standard Methods of Fire Tests for Flame-Resistant Textiles and Films, 1989 and 1996 editions;
UL 94 Test for Flammability of Plastic Materials for Parts in Devices and Appliances, 5th Edition, October 29, 1996;
Limiting Oxygen Index (LOI), ASTM D-2863;
Cone Calorimetry, ASTM E-1 or ASTM E 1354;
ASTM D 2633-82, burn test.

### Test Compounds

HA-1 is N.N',N",N"'-tetrakis[4,6-bis(butyl-1,2,2,6,6-pentamethylpiperidin-4-yl)aminos-triazin-2-yl]-1,10-diamino-4,7-diazadecane, (CHIMASSORB® 119, Ciba Specialty Chemicals Corp.).
HA-2 is bis(2,2,6,6-tetramethylpiperidin-4-yl) sebacate, (TINUVIN® 770, Ciba Specialty Chemicals Corp.).
NOR-1 is the mixture of compounds of formula I, II, IIA and III where R is cyclohexyl. NOR-2 is 1-cyclohexyloxy-2,2,6,6-tetramethyl-4-octadecylaminopiperidine.
NOR-3 is bis(1-octyloxy-2,2,6,6-tetramethylpiperidin-4-yl) sebacate, (TINUVIN® 123, Ciba Specialty Chemicals Corp.; comparison).
NOR-4 is 2,4-bis[(1-cyclohexyloxy-2,2,6,6-tetramethylpiperidin-4-yl)butylamino]-6-(2-hydroxyethylamino-s-triazine.
NOR-5 is bis(1-cyclohexyloxy-2,2,6,6-tetramethylpiperidin-4-yl) adipate.
NOR-6 is the oligomeric compound which is the condensation product of 4,4'-hexamethylenebis(amino-2,2,6,6-tetramethylpiperidine) and 2,4-dichloro-6-[(1-octyloxy-2,2,6,6-tetramethylpiperidin-4-yl)butylamino]-s-triazine end-capped with 2-chloro-4,6-bis(dibutylamino)-s-triazine (comparison).
NOR-7 is the oligomeric compound which is the condensation product of 4,4'-hexamethylenebis(amino-2,2,6,6-tetramethylpiperidine) and 2,4-dichloro-6-[(1-cyclohexyloxy-2,2,6,6-tetramethylpiperidin-4-yl)butylamino]-s-triazine end-capped with 2-chloro-4,6-bis(dibutylamino)-s-triazine.
NOR-8 is 2,4-bis[(1-cyclohexyloxy-2,2,6,6-piperidin-4-yl)-butylamino]-6-chloro-s-triazine.
FR-1 is tris[3-bromo-2,2-bis(bromomethyl)propyl] phosphate, (PB 370®, FMC Corp.).
FR-2 is ammonium polyphosphate (APP).
FR-3 is bis(2,3-dibromopropyl) ether of tetrabromobisphenol A (PE68).
FR-4 is ammonium polyphosphate/synergist blend, HOSTAFLAM® AP750.
FR-5 is decabromodiphenyl oxide, SAYTEX® 102E.
FR-6 is ethylene bis-(tetrabromophthalimide), (SAYTEX® BT-93).

### Example 1

Fiber grade polypropylene, containing 0.05% by weight of calcium stearate and 0.05% of tris(2,4-di-tert-butylphenyl) phosphite and 0.05% of a N,N-dihydroxylamine made by the direct oxidation of N,N-di(hydrogenated tallow)amine is dry blended with the test additives and then melt compounded at 234°C (450°F) into pellets. The pelletized fully formulated resin is then spun at 246°C (475°F) into fiber using a Hills laboratory model fiber extruder. The spun tow of 41 filaments is stretched at a ratio of 1:3.2 to give a final denier of 615/41.

Socks are knitted from the stabilized polypropylene fiber on a Lawson-Hemphill Analysis Knitter and tested under NFPA 701 vertical burn procedure. The time in seconds for the knitted sock to extinguish after the insult flame is removed is reported as "After Flame". Both the maximum time for any one replicate and the total time for all ten replicates are shown in the table below. Efficacy as a flame retardant is demonstrated when low After Flame times are observed relative to a blank sample containing no flame retardant

| | After Flame (time sec) | |
|---|---|---|
| Formulation | max | total |
| blank | 55 | 177 |
| *HA-1 (1%) | 131 | 231 |
| | | |

| brominated flame retardants | | |
|---|---|---|
| *FR-1 (3%) | 0 | 0 |
| *FR-1 (1%) | 10 | 27 |
| | | |

| NOR-hindered amines | | |
|---|---|---|
| NOR-1 (1%) | 0 | 0 |
| NOR-2 (1%) | 0 | 0 |
| NOR-3 (1%; comparison) | 15 | 43 |

| | | |
|---|---|---|
| * for comparison | | |

Surprisingly, while conventional hindered amines have at best essentially a neutral effect on flame retardancy, the instant 1-hydrocarbyoxy (NOR) hindered amines are as effective as brominated flame retardants at one third the concentration level. These NOR-hindered amines do not have the detrimental effects associated with inorganic flame retardants.

### Example 2

Following the procedure set forth in Example 1, stabilized polypropylene fibers are prepared.

Socks are knitted from the stabilized polypropylene fiber on a Lawson-Hemphill Analysis Knitter and tested under NFPA 701 vertical burn procedure. Several other types of hindered amines are compared to the NOR-hindered amines as potential flame retardants using the NFPA 701 test procedure. The results are given in the table below.

| | After Flame (time sec) | |
|---|---|---|
| Formulation | max | total |
| blank | 26 | 69 |
| *FR-1 (3%) | 0 | 0 |
| *FR-2 (0.5%) | 32 | 70 |
| | | |

| non NOR-hindered amines | | |
|---|---|---|
| *HA-1 (1%) | 39 | 175 |
| *HA-2 (1%) | 52 | 144 |
| | | |

| NOR-hindered amines | | |
|---|---|---|
| NOR-4 (1%) | 0 | 0 |
| NOR-5 (1%) | 0 | 0 |
| NOR-6 (1%;comparison) | 6 | 10 |
| NOR-1 (1%) | 0 | 0 |
| NOR-7 (1%) | 0 | 0 |
| NOR-8 (1%) | 0 | 0 |
| NOR-1 (1%) | 0 | 0 |
| NOR-1 (0.5%) | 0 | 0 |
| NOR-1 (0.25%) | 18 | 33 |

| | | |
|---|---|---|
| * for comparison | | |

It is clear that the instant NOR-hindered amines are as a group effective as some phosphorus flame retardants in providing flame retardancy to polypropylene fibers, and that they are effective in reducing After Flame at levels as low as 0.25% by weight.

### Example 3

Molding grade polypropylene is dry blended with test additives and then melt compounded into pellets. The pelletized fully formulated resin is then compression molded into test specimens using a Wabash Compression Molder.

Test plaques are tested under UL-94 Vertical Burn test conditions. The average time in seconds for the test sample to extinguish after the insult flame is removed is reported. Efficacy as a flame retardant is demonstrated when low Flame times are observed relative to the blank sample containing no flame retardant.

All samples containing the instant NOR-hindered amines self-extinguished after application of the first flame. This shows that the instant NOR compounds exhibit discernible efficacy as flame retardan ts essentially equal to that bestowed by a halogenated or phosphate flame retardant. The blank burned completely after application of the first flame.

| Formulation | 1st Flame (average seconds) |
|---|---|
| blank | 172 |
| | |
| FR-3 (1,75%) + | |
| Sb₂O₃ (1%) | 5 |
| FR-4 (25%) | 4 |
| | |
| NOR-1 (1%) | 4 |
| NOR-1 (5%) | 4 |
| NOR-1 (10%) | 3 |

### Example 4

Film grade polyethylene is dry blended with the test additives and then melt compounded into pellets. The pelletized fully formulated resin is then blown at 205°C using a MPM Superior Blown film extruder.

The films are tested for flame retardancy under NFPA 701 test conditions. The films containing the instant NOR compounds show flame retardancy.

Film grade polypropylene is handled in a similar fashion and polypropylene films containing the instant NOR compounds also show flame retardancy.

### Example 5

Molded test specimines are prepared by injection molding thermoplastic olefin (TPO) pellets containing a NOR-hindered amine compound. The TPO formulations may also contain a pigment, a phosphite, a phenolic antioxidant or hydroxylamine, a metal stearate, a UV absorber or a hindered amine stabilizer or a mixture of hindered amine and UV absorber.

Pigmented TPO formulation composed of polypropylene blended with a rubber modifier where the rubber modifier is an in-situ reacted copolymer or blended product containing copolymers of propylene and ethylene with or without a ternary component such as ethylidene norbornene are stabilized with a base stabilization system consisting of an N,N-dialkylhydroxylamine or a mixture of hindered phenolic antioxidant and an organophosphorus compound.

The TPO plaques are tested for flame retardancy using the UL-94 Vertical Burn conditions. A minimum of three replicates are tested. Efficacy as a flame retardant is . measured relative to a blank sample containing no flame retardant.

The TPO formulations containing an instant NOR-hindered amine show flame retardancy efficacy.

### Example 6

Film grade ethylene/vinyl acetate (EVA) copolymers containing 20 weight percent or less of vinyl acetate are dry blended with test additives amd then melt compounded into pellets. The pelletized fully formulated resin is then blown into a film at 205°C using a MPM Superior Blown-film extruder.

The films are tested for flame retardancy under NFPA 701 test conditions. The films containing the instant NOR-hindered amine compounds show flame retardancy.

Film grade low density polyethylene (LDPE) which contains some linear low density polyethylene (LLDPE) and/or ethylene/vinyl acetate (EVA) are dry blended with test additives and blown into film as described above for EVA copolymer resin. The films are tested for flame retardancy under NFPA 701 test conditions and those containing the instant NOR-hindered amines show flame retardancy.

### Example 7

Fiber grade polypropylene is dry blended with test additives and then melt compounded at 400°F (204°C). In addition to the instant NOR-hindered amine compounds, halogenated flame retardants are included in the formulations. Typical formulations contain the instant NOR compounds and a flame retardant such as bis(2,3-dibromopropyl) ether of bisphenol A (PE68), decabromodiphenyloxide (DBDPO), ethylene bis-tetrabromophthalimide (SAYTEX BT-93) or ethylene bis-dibromonorbornanedicarboximide (SAYTEX BN-451). Other formulations may contain antimony trioxide in addition to brominated flame retardants. Other formulations may contain phosphorus based flame retardants such as ethylenediamine diphosphate (EDAP) or ammonium polyphosphate (APP).

Fibers are extruded from these formulations using a Hills laboratory scale fiber extruder at 475°F (246°C). Socks are knitted from these fibers and tested for flame retardancy according to the NFPA 701 vertical burn test conditions. The fibers containing the NOR-hindered amine compounds show flame retardancy.

### Example 8

Molding grade polypropylene is dry blended with test additives and then melt compounded into pellets. In addition to the instant NOR-hindered amine compounds selected flame retardants are also included. The pelletized fully formulated resin is then compression molded into test specimens using a Wabash Compression Molder.

Test plaques are tested under UL-94 Vertical Burn conditions. A minimum of three replicates are tested. The average time in seconds for the test sample to extinguish after a first and second insult flame is removed is reported. Efficacy as a flame retardant is demonstrated when low Flame times are observed.

| Formulation | 1st Flame Time (average seconds) | 2nd Flame Time (average seconds) |
|---|---|---|
| blank | 172 | ** |
| | | |
| FR-3 (1.75%) + | | |
| Sb₂O₃ (1%) | 5 | 22 |
| | | |
| FR-3 (1.75%) + | | |
| Sb₂O₃ (1%) + | | |
| NOR-1 (5%) | 2 | 1 |
| | | |
| FR-4 (10%) | 103 | ** |
| | | |
| FR-4 (10%) + | | |
| NOR-1 (5%) | 5 | 4 |

| | | |
|---|---|---|
| ** no time is shown for the 2nd flame since the sample is completely consumed after application of the first flame. | | |

All samples containing the instant NOR compound along with a flame retardant self-extinguish after application of the first and second flames. Additionally, the time of burning decreases significantly in comparison to the formulation containing flame retardant alone. This shows that the instant NOR compounds enhance the flame retardancy of a halogenated or phosphate flame retardant.

### Example 9

Molded test specimens are prepared by injection molding thermoplastic olefin (TPO) pellets as described in Example 5. Typical formulations contain the instant NOR compounds and a flame retardant such as tris[3-bromo-2,2,-bis(bromomethyl)propyl] phosphate (PB370), bis(2,3-dibromopropyl) ether of tetrabromobisphenol A (PE68), decabromodiphenyloxide (DBDPO), ethylene bis-tetrabromophthalimide (SAYTEX BT-93) or ethylene bis-dibromonorbornanedicarboximide (SAYTEX BN-451). Other formulations may contain antimony trioxide in addition to brominated flame retardants. Other formulations may contain phosphorus based flame retardants such as ethylenediamine diphosphate (EDAP).

Plaques are tested under the UL-94 test method. A minimum of three replicates are tested. The average time in seconds for the test sample to extinguish after a first and second insult flame is removed is reported. The instant NOR-hindered amine compounds enhance the flame retardancy of a halogenated or phosphate flame retardant compared to when the flame retardant is used alone.

### Example 10

Film grade polyethylene is dry blended with test additives and then melt compounded and into pellets. In addition to the instant NOR-hindered amine compounds, flame retardants are also included in the formulation. Typical formulations contain the NOR compounds and a flame retardant such as bis(2,3-dibromopropyl) ether of tetrabromobisphenol A (PE68), decabromodiphenyloxide (DBDPO) or ethylene bis-tetrabromophthalimide (SAYTEX BT-93). Other formulations may contain antimony trioxide in addition to brominated flame retardants. Other formulations may contain phosphorus based flame retardants such as ethylenediamine diphosphate (EDAP) or ammonium polyphosphate (APP). The pelletized fully formulated resin is then blown into film at 205°C using a Superior Blown-film extruder.

The test specimens are tested under NFPA 701 test conditions. The instant NOR-hindered amines enhance the flame retardancy of a halogenated or phosphate flame retardant.

### Example 11

Thermoplastic resins including polypropylene, polyethylene homopolymer, polyolefin copolymer or thermoplastic olefins (TPO), high impact polystyrene (HIPS) and ABS are dry blended with the instant NOR compounds and then melt compounded into pellets. The pelletized fully formulated resin is then processed into a useful article such as extrusion into fiber; blown or cast extrusion into film; blow molded into bottles; injection molded into molded articles, thermoformed into molded articles, extruded into wire and cable housing or rotation molded into hollow articles.

The articles containing the instant NOR compounds exhibit flame retardancy when tested by a known standard test method for assessing flame retardancy.

Polyethylene wire and cable applications are tested for flame retardancy according to ASTM D-2633-82 bum test method. The materials containing the instant NOR compounds show flame retardancy.

### Example 12

Articles prepared according to Example 11 which additionally contain an organophosphorus stabilizer selected from the group consisting of tris(2,4-di-tert-butylphenyl) phosphite, bis(2,4-di-tert-butyl-6-methylphenyl) ethyl phosphite, 2,2',2"-nitrilo[triethyl-tris-(3,3',5,5'-tetra-tert-butyl-1,1'-biphenyl-2,2'-diyl)phosphite], tetrakis(2,4-di-butylphenyl) 4,4'-biphenylenediphosphonite, tris(nonylphenyl) phosphite, bis(2,4-di-tert-butylphenyl) pentaerythrityl diphosphite, 2,2'-ethylidenebis(2,4-di-tert-butylphenyl) fluorophosphite and 2-butyl-2-ethylpropan-1,3-diyl 2,4,6-tri-tert-butylphenyl phosphite as well as the instant NOR-hindered amine compounds exhibit good flame retardancy properties.

### Example 13

Articles prepared according to Example 11 which additionally contain a o-hydroxyphenyl-2H-benzotriazole, a hydroxyphenyl benzophenone or a o-hydroxyphenyl-s-triazine UV absorber selected from the group consisting of 2-(2-hydroxy-3,5-di-α-cumylphenyl)-2H-benzotriazole, 2-(2-hydroxy-5-methylphenyl)-2H-benzotriazole, 5-chloro-2-(2-hydroxy-3,5-di-tert-butylphenyl)-2H-benzotriazole, 2-(2-hydroxy-3,5-di-tert-amylphenyl)-2H-benzotriazole, 2-(2-hydroxy-3-α-cumyl-5-tert-octylphenyl)-2H-benzotriazole, 2,4-di-tert-butylphenyl 3,5-di-tert-butyl4-hydroxybenzoate, 2-hydroxy-4-n-octyloxybenzophenone and 2,4-bis(2,4-dimethyphenyl)-6-(2-hydroxy-4-octyloxyphenyl)-s-triazine as well as the instant NOR-hindered amine compounds exhibit good flame retardancy.

### Example 14

Articles prepared according to Example 11 which additionally contain a o-hydroxyphenyl-2H-benzotriazole, a hydroxyphenyl benzophenone or a o-hydroxyphenyl-s-triazine UV absorber selected from the group consisting of 2-(2-hydroxy-3,5-di-α-cumylphenyl)-2H-benzotriazole, 2-(2-hydroxy-5-methylphenyl)-2H-benzotriazole, 5-chloro-2-(2-hydroxy-3,5-di-tert-butylphenyl)-2H-benzotriazole, 2-(2-hydroxy-3,5-di-tert-amylphenyl)-2H-benzotriazole, 2-(2-hydroxy-3-α-cumyl-5-tert-octylphenyl)-2H-benzotriazole, 2,4-di-tert-butylphenyl 3,5-di-tert-butyl4-hydroxybenzoate, 2-hydroxy-4-n-octyloxybenzophenone and 2,4-bis(2,4-dimethyphenyl)-6-(2-hydroxy-4-octyloxyphenyl)-s-triazine as well as the instant NOR-hindered amine compounds and a flame retardant such as tris[3-bromo-2,2,-bis(bromomethyl)propyl] phosphate (PB370), bis(2,3-dibromopropyl) ether of tetrabromobisphenol A (PE68), decabromodiphenyloxide (DBDPO), ethylene bis-tetrabromophthalimide (SAYTEX BT-93) or ethylene bis-dibromonorbornanedicarboximide (SAYTEX BN-451) exhibit good flame retardancy properties.

Other formulations may contain antimony trioxide in addition to brominated flame retardants. Other formulations may contain phosphorus based flame retardants such as ethylenediamine diphosphate (EDAP).

### Example 15

ABS polymer (Dow 342EZ) is blended with the test stabilizers and additives, and compounds on a twin screw extruder at a die temperature of 220°C and the extrudate is pelletized. The pellets are injection molded on a BOY 50 machine to produce bars of dimensions 5" L x 0.5" W x 0.125" D. Optionally, the ABS pellets are compression molded at 220°C to produce test plaques of 4" L x 4" W x 0.125" D for cone calorimetry testing.

Cone calorimetry testing of the compression molded plaques is carried out according to ASTM E 1354. The results of the tests are shown below.

| Sample* | A | | B | | C | | D | |
|---|---|---|---|---|---|---|---|---|
| | Run 1 | Run 2 | Run 1 | Run 2 | Run 1 | Run 2 | Run 1 | Run2 |
| PHRR | 1240 | 1273 | 1007 | 1085 | 1209 | 1265 | 1200 | 1265 |
| Ave HRR | 740 | 745 | 393 | 394 | 652 | 653 | 435 | 476 |
| Total HR | 97 | 96 | 44 | 47 | 86 | 85 | 48 | 53 |
| Ave CO y | 0.1 | 0.1 | 0.1 | 0.1 | 0.1 | 0.1 | 0.1 | 0.1 |
| Ave CO₂y | 2.4 | 2.4 | 0.8 | 0.9 | 2.3 | 2.3 | 1.4 | 1.5 |

| | | | | | | | | |
|---|---|---|---|---|---|---|---|---|
| *PHRR - peak heat release rate Ave HRR - the average heat release rate over the time of the test Total HR - total heat evolved (area under the calorimetry curve) Ave CO y - average carbon monoxide yield Ave CO₂y - average carbon dioxide yield Sample A is blank with no flame retardant present. Sample B contains 15 parts by weight of FR-5 and 4 parts by weight of antimony trioxide. Sample C contains 4 parts by weight of NOR-1. Sample D contains 15 parts by weight of FR-5 and 4 parts by weight of NOR-1. | | | | | | | | |

Inspection of the results in the table shows that Sample C containing the NOR-1 gives an unexpected reduction in average heat release rate and reduction in total heat release compared to the unstabilized ABS blank of Sample A.

Nearly equivalent values of average heat release rate and total heat release are observed when comparing a commerical FR system as seen in Sample B with the a combination of FR-5 and NOR-1 as seen in Sample D. In this case the instant NOR-1 compound is used to replace antimony oxide. This is advantageous to remove a heavy metal (antimony) from the system and not to sacrifice the excellent flame retardant performance that can be achieved with the state-of-the-art FR system.

### Example 16

Following the general procedure of Example 15, high impact polystyrene (HIPS) polymer (STYRON® 484C, Dow Chemical Co.) is compounded with the instant NOR-hindered amine, pelletized and then injection or compression molded into plaques. These plaques are tested for flame retardant efficacy using cone calorimetry, LOI or UL-94 test method.

The plaques containing the NOR compound exhibit flame retardancy. Flame retardant HIPS polymers find application in housings for business machines.

### Example 17

This Example shows the efficacy of the instant NOR compounds in PVC formulations. Such formulations are useful in flexible or rigid PVC and in wire and cable applications. Typical formulations are seen below:

| Component | parts | parts | parts | parts |
|---|---|---|---|---|
| PVC resin | 100 | 100 | 100 | 100 |
| tin mercaptide | 1.5 | -- | 2.0 | -- |
| tin carboxyate | -- | 2.5 | -- | 2.0 |
| process aid | 1.5 | 1.5 | 2.0 | 2.0 |
| impact mod. | 6.0 | 6.0 | 7.0 | 7.0 |
| paraffin wax | 1.0 | 0.3 | 1.0 | 1.0 |
| polyethyl wax | 0.1 | 0.1 | 0.2 | 0.2 |
| Ca stearate | 1.0 | -- | 0.8 | -- |
| pigment | 1.0 | 0.9 | 5.0 | 5.0 |

Fully formulated PVC containing the NOR compound is pelletized and then injection molded into test plaques for examination of flame retardancy using the UL-94 or LOI test method. The PVC plaques containing the instant NOR compound demonstrate flame retardancy.

### Example 18

Polypropylene, the base resin containing 0.05% by weight of calcium stearate, 0.1% by weight of tris(2,4-di-tert-butyl-phenyl) phosphite and 0.05% by weight of neopentanetetrayl tetrakis(3,5-di-tert-butyl-4-hydroxyhydrocinnamate), is melt compounded on a single-screw extruder at 425°F (218°C) with the respective additives to form the formulations given in the table below. 125 mil plaques are compression molded at 400°F(204°C). The plaques are tested for flame retardancy by the UL 94V thick section test.

| Formulation | 1st Flame Time (average seconds) | 2nd Flame Time (average seconds) |
|---|---|---|
| FR-4 (5%) | 252 | ** |
| | | |
| FR-4 (10%) | 103 | ** |
| | | |
| FR-4 (5%) + | | |
| NOR-1 (5%) | 3 | 83 |
| | | |
| FR-4 (10%) + | | |
| NOR-1 (5%) | 5 | 4 |
| | | |
| FR-4 (25%) | 7 | 11 |

| | | |
|---|---|---|
| ** no time is shown for the 2nd flame since the sample is completely consumed after application of the first flame. | | |

It is clear that the combination of the hindered amine NOR-1 with inorganic flame retardant at the same total concentration potentiates the effectiveness of the inorganic flame retardant allowing for a lower concentration of said inorganic flame retardant to be used when combined with the hindered amine component. This is a synergistic effect.

Even when the inorganic flame retardant is used at very high levels alone, it cannot provide as much flame retardancy as the combination of said flame retardant with the hindered amine at a much lower total concentration.

### Example 19

Following the procedure of Example 18, polypropylene 10 mil films are compression molded from the flame retardant formulations at 400°F (204°C). These films are tested for flame retardancy using the 1989 and 1996 NFPA 701 test.

| 1996 NFPA 701 Test | | | |
|---|---|---|---|
| Formulation | Burn Drips | Weight Loss | Pass/Fail |
| Pass Criteria | < 2 sec | < 40 % | |
| Blank | > 2 sec | 39 % | Fail |
| NOR-1 (1%) | < 2 sec | 7 % | Pass |
| NOR-1 (5%) | > 2 sec | 31 % | Fail |
| NOR-1 (10%) | > 2 sec | 57 % | Fail |

| 1989 NFPA 701 Test | | | | |
|---|---|---|---|---|
| Formulation | After Flame | Burn Drips | Char Length | Pass/Fail |
| Pass Criteria | < 2 sec | 0 sec | <5.5 in. | |
| Blank | 28 sec | >2 sec | 10 in | Fail |
| NOR-1 (1%) | < 2 sec | 0 sec | 3.4 in | Pass |
| NOR-1 (5%) | 24 sec | >2 sec | 9.3 in | Fail |
| NOR-1 (10%) | 21 sec | >2 sec | 10 in | Fail |

### Example 20

Fiber grade polyethylene is dry blended with test additives and melt compounded at 400°F. Fibers are extruded from this formulation using a Hills laboratory scale fiber extruder. Socks are knitted from the fibers and are tested for flame retardancy according to NFPA 701 vertical burn method. The fibers containing the instant NOR compounds show flame retardancy.

### Example 21

Polyethylene fibers prepared as seen in Example 20 contain an instant NOR compound in combination with a classic flame retardant such as decabromodiphenyl oxide (DBDPO); bis(2,3-dibromopropyl) ether of tetrabromobis phenol A (PE68); ethylene bis-tetrabromophthalimide (SAYTEX® BT-93) and the like. These formulated fibers are tested for flame retardancy according to NFPA 701.

The fibers containing both an NOR compound and a classic halogenated or phosphorus flame retardant exhibit enhanced flame retardancy compared to the classic flame retardant alone.

### Example 22

Polyethylene (LDPE) is melt compounded on a twin screw extruder at 450°F (232°C) with the respective additives to form the formulations given in the table below. 125 mil plaques are compression molded at 400°F(204°C).

The plaques are tested for flame retardancy by the UL 94V thick section test.

| Formulation | 1st Flame Time (average seconds) | 2nd Flame Time (average seconds) |
|---|---|---|
| Blank | 163 | |
| | | |
| NOR-1 (1%) | 149 | |
| | | |
| NOR-1 (5%) | 124 | |
| | | |
| FR-6 (3%) + | | |
| Sb₂O₃(1%) | 1 | 250 |
| | | |
| FR-6 (3%) + | | |
| Sb₂O₃(1%) + | | |
| NOR-1 (5%) | 11 | 8 |
| FR-4 (10%) | 198 | ** |
| | | |
| FR-4 (5%) + | | |
| NOR-1 (5%) | 118 | - |
| | | |
| FR-4 (10%) + | | |
| NOR-1 (5%) | 1 | 64 |

| | | |
|---|---|---|
| ** no time is shown for the 2nd flame since the sample is completely consumed after the application of the first flame. | | |

It is clear that the combination of the hindered amine NOR-1 with inorganic flame retardant at the same total concentration potentiates the effectiveness of the inorganic flame retardant allowing for a lower concentration of said inorganic flame retardant to be used when combined with the hindered amine component. This is a synergistic effect.

### Example 23

Polyethylene (LDPE) is melt compounded on a twin screw extruder at 450°F (232°C) with the respective additives to form the formulations given in the table below. 2 mil thick films are blown on a MPM extruder at 400°F(204°C).

The films are tested for flame retardancy by the 1989 NFPA 701 test.

| 1989 NFPA 701 Test | | | | |
|---|---|---|---|---|
| Formulation | After Flame | Burn Drips | Char Length | Pass/Fail |
| Pass Criteria | < 2 sec | 0 sec | <5.5 in. | |
| Blank | 0-14 sec | 0-2 sec | 8.5 in | Fail |
| NOR-1 (1%) | 0 sec | 0 sec | 4.8 in | Pass |
| NOR-1 (5%) | 0 sec | 0 sec | 4.8 in | Pass |
| NOR-1 (10%) | 0 sec | 0 see | 7.9 in | Fail |

### Example 24

Fiber grade poly(ethylene terephthalate) (PET) is dry blended with test additives, then melt compounded at 550°F (288°C) and then pelletized. The polyester pellets are dried at 175°F (79°C) for 24 hours under vacuum. The dried pellets are extruded into fibers using a Hills laboratory scale fiber extruder at 550°F (288°C). Socks are knitted from these fibers and tested for flame retardancy according to NFPA 701 test method.

The polyester fibers containing the instant NOR hindered amine compound show flame retardancy.

### Example 25

Polyester (PET) fibers prepared as seen in Example 24 contain an instant NOR compound in combination with a classic flame retardant. These formulated fibers are tested for flame retardancy according to NFPA 701 vertical burn test method.

The fibers containing both an NOR compound and a classic halogenated or phosphorus flame retardant exhibit enhanced flame retardancy compared to the classic flame retardant alone.

### Example 26

Foam grade polyethylene is dry blended with test additives and then melt compounded into pellets. The pelletized fully formulated resin is then blown into foam.

Test specimens cut from the foam are tested under the UL-94 burn test specification. The foam containing the instant NOR compound exhibits flame retardancy.

### Example 27

Polyethylene foam prepared as seen in Example 26 contains an instant NOR compound in combination with a classic flame retardant. The formulated foam is tested for flame retardancy according to the UL-94 bum test method.

The foam containing both an NOR compound and a classic flame retardant exhibits enhanced flame retardancy compared to the classic halogenated or phosphorus flame retardant alone.

### Example 28

Wire & cable grade polyethylene is dry blended with test additives and then melt compounded into pellets. The pelletized fully formulated resin is then extruded onto wire.

Test specimens are tested for flame retardancy using the ASTM D 2633-82 bum test conditions. The formulations containing the instant NOR compounds show flame retardancy.

### Example 29

Wire & cable grade polyethylene is dry blended with test additives and then melt compounded into pellets. The pelletized fully formulated resin is then extruded onto wire.

Test specimens are tested for flame retardancy using the ASTM D 2633-82 burn test conditions. The formulations containing both an NOR compound and a classic flame retardant exhibits enhanced flame retardancy compared to the classic halogenated or phosphorus flame retardant alone.

### Example 30

Fiber grade polyethylene is dry-blended with hindered amine test additives. Non-woven fabrics are produced from the polymer blend formulation by a spun-bonded or melt-blown process.

The non-woven fabrics made thereby are tested for flame retardancy according to the NFPA 701 vertical burn test specifications. The fabrics containing the hindered amine compounds exhibit flame retardancy.

### Example 31

Fiber grade polyethylene is dry-blended with test additives. In addition to a hindered amine, selected flame retardants are also included in the various formulations. Non-woven fabrics are produced from the polymer blend formulations by a spun-bonded or melt-blown process.

The non-woven fabrics made thereby are tested for flame retardancy according to the NFPA 701 vertical burn test specifications. The fabrics containing the hindered amine compounds and selected flame retardants exhibit flame retardancy.

### Example 32

Fiber grade polypropylene is dry-blended with hindered amine test additives. Non-woven fabrics are produced from the polymer blend formulation by a spun-bonded or melt-blown process.

The non-woven fabrics made thereby are tested for flame retardancy according to the NFPA 701 vertical burn test specifications. The fabrics containing the hindered amine compounds exhibit flame retardancy.

### Example 33

Fiber grade polypropylene is dry-blended with test additives. In addition to a hindered amine, selected flame retardants are also included in the various formulations. Non-woven fabrics are produced from the polymer blend formulations by a spun-bonded or melt-blown process.

The non-woven fabrics made thereby are tested for flame retardancy according to the NFPA 701 vertical burn test specifications. The fabrics containing the hindered amine compounds and selected flame retardants exhibit flame retardancy.

### Example 34

Molding grade polystyrene is dry-blended with hindered amine test additives and then melt compounded. Specimens are injection molded from these test formulations.

The specimens are tested for flame retardancy according to the UL-94 bum test specifications. The molded specimens containing the hindered amine compounds exhibit flame retardancy.

### Example 35

Molding grade polystyrene is dry-blended with test additives and then melt compounded. In addition to the hindered amines, selected flame retardants are also included in the test formulations. Specimens are injection molded from these test formulations.

The specimens are tested for flame retardancy according to the UL-94 bum test specifications. The molded specimens containing the hindered amine compounds and selected flame retardants exhibit flame retardancy.

### Example 36

Foam grade polystyrene is dry-blended with hindered amine test additives and then melt compounded. Foam polystyrene specimens are prepared from these test formulations.

The specimens are tested for flame retardancy according to the UL-94 bum test specifications. The foam specimens containing the hindered amine compounds exhibit flame retardancy.

### Example 37

Foam grade polystyrene is dry-blended with test additives and then melt compounded. In addition to the hindered amines, selected flame retardants are also included in these test formulation. Foam polystyrene specimens are prepared from these test formulations.

The specimens are tested for flame retardancy according to the UL-94 burn test specifications. The foam specimens containing the hindered amine compounds and flame retardants exhibit flame retardancy.

## Claims

1. Use of a hindered amine compound containing a group of the formula 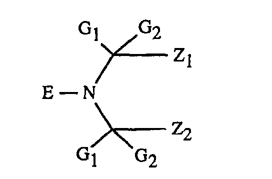 where
G₁ and G₂ are independently alkyl of 1 to 4 carbon atoms or are together pentamethylene,
Z₁ and Z₂ are each methyl, or Z₁ and Z₂ together form a linking moiety which may additionally be substituted by an ester, ether, amide, amino, carboxy or urethane group, and
E is C₅-C₁₂cycloalkoxy, C₇-C₂₅aralkoxy, C₆-C₁₂aryloxy, as a flame retardant for a polymeric substrate.

2. Use according to claim 1 wherein the polymer substrate is selected from the group of resins consisting of the polyolefins, the thermoplastic olefins, styrenic polymers and copolymers, and ABS.

3. Use according to claim 1 wherein the hindered amine is 0.25 to 10% by weight based on the polymer substrate.

4. Use according to claim 1 wherein the hindered amine is selected from the class of 2,2,6,6-tetramethylpiperidines substituted on the nitrogen atom by cycloalkoxy of 5 to 12 carbon atoms or aralkoxy of 7 to 15 carbon atoms.

5. A method of flame retarding a polymeric substrate by adding thereto a hindered amine compound as described in claim 1.

6. A flame retardant composition which comprises
(a) a polymeric substrate,
(b) a synergistic mixture of
(i) a hindered amine as described in claim 1, and
(ii) a selected flame retardant compound selected from the halogenated, phosphorus, boron, silicon and antimony compounds, metal hydroxides, metal hydrates, metal oxides or mixtures thereof.

## Patentansprüche

1. Verwendung einer gehinderten Aminverbindung, enthaltend eine Gruppe der Formel 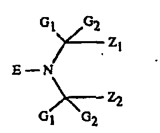 worin
G₁ und G₂ unabhängig Alkyl mit 1 bis 4 Kohlenstoffatomen darstellen oder zusammen Pentamethylen darstellen,
Z₁ und Z₂ jeweils Methyl darstellen oder Z₁ und Z₂ zusammen eine Bindungseinheit bilden, die zusätzlich mit einer Ester-, Ether-, Amid-, Amino-, Carboxy- oder Urethangruppe substituiert sein kann, und
E C₅-C₁₂-Cycloalkoxy, C₇-C₂₅-Aralkoxy, C₆-C₁₂-Aryloxy darstellt, als Flammverzögerungsmittel für ein Polymersubstrat.

2. Verwendung nach Anspruch 1, wobei das Polymersubstrat aus der Gruppe von Harzen, bestehend aus den Polyolefinen, den thermoplastischen Olefinen, Styrolpolymeren und -Copolymeren und ABS, ausgewählt ist.

3. Verwendung nach Anspruch 1, wobei das gehinderte Amin 0,25 bis 10 Gew.-%, bezogen auf das Polymersubstrat, ist.

4. Verwendung nach Anspruch 1, wobei das gehinderte Amin aus der Klasse von 2,2,6,6-Tetramethylpiperidinen, substituiert an dem Stickstoffatom mit Cycloalkoxy mit 5 bis 12 Kohlenstoffatomen oder Aralkoxy mit 7 bis 15 Kohlenstoffatomen, ausgewählt ist.

5. Verfahren zur Flammverzögerung eines Polymersubstrats durch Zugeben einer wie in Anspruch 1 beschriebenen gehinderten Aminverbindung dazu.

6. Flammverzögerungszusammensetzung, die umfasst
(a) ein Polymersubstrat,
(b) ein synergistisches Gemisch von
(i) einem wie in Anspruch 1 beschriebenen gehinderten Amin und
(ii) einer ausgewählten Flammverzögerungsverbindung, ausgewählt aus den halogenierten, Phosphor-, Bor-, Silizium- und Antimonverbindungen, Metallhydroxiden, Metallhydraten, Metalloxiden und Gemischen davon.

## Revendications

1. Utilisation d'un composé d'amine encombrée contenant un groupe de formule : 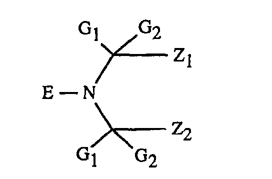 dans laquelle
G₁ et G₂ représentent indépendamment un groupe alkyle de 1 à 4 atomes de carbone ou forment ensemble un pentaméthylène ;
Z₁ et Z₂ représentent chacun un groupe méthyle ou Z₁ et Z₂ forment ensemble une partie de liaison qui peut en outre être substituée par un groupe ester, éther, amide, amino, carboxy ou uréthanne et
E représente un groupe cycloalcoxy en C₅-C₁₂, un groupe aralcoxy en C₇-C₂₅, un groupe aryloxy en C₆-C₁₂
comme agent d'ignifugation pour un substrat polymère.

2. Utilisation selon la revendication 1, dans laquelle le substrat polymère est choisi dans le groupe des résines constitué par les polyoléfines, les oléfines thermoplastiques, les polymères et copolymères styréniques et l'ABS.

3. Utilisation selon la revendication 1, dans laquelle l'amine encombrée représente 0,25 à 10 % en poids par rapport au substrat polymère.

4. Utilisation selon la revendication 1, dans laquelle l'amine encombrée est choisie dans la catégorie des 2,2,6,6-tétraméthylpipéridines substituées sur l'atome d'azote par un groupe cycloalcoxy de 5 à 12 atomes de carbone ou par un groupe aralcoxy de 7 à 15 atomes de carbone.

5. Procédé d'ignifugation d'un substrat polymère en ajoutant à celui-ci un composé d'amine encombrée selon la revendication 1.

6. Composition ignifuge, qui comprend :
a) un substrat polymère ;
b) un mélange synergique
(i) d'une amine encombrée selon la revendication 1 ; et
(ii) d'un composé ignifuge sélectionné, choisi parmi les composés de phosphore, de bore, de silicium, et d'antimoine halogénés, les hydroxydes de métal, les hydrates de métal, les oxydes de métal ou des mélanges de ceux-ci.
